# EUROPÄISCHE PATENTSCHRIFT

(11) **EP 1 141 620 B1**
(45) Veröffentlichungstag und Bekanntmachung des Hinweises auf die Patenterteilung: **29.03.2006**
(21) Anmeldenummer: 99968386.5
(22) Anmeldetag: 27.12.1999
(51) Int. Cl.: F17D 5/02, G01M 3/22

(54) **GEOREFERENZIERTES PRÜFSYSTEM**
GEOREFERENCED MONITORING SYSTEM
SYSTEME DE CONTROLE GEOREFERENCE

(30) Priorität: 31.12.1998 DE 19860892; 25.02.1999 DE 19907995
(43) Veröffentlichungstag der Anmeldung: 10.10.2001
(73) Patentinhaber: Westfälische Ferngas AG, 44137 Dortmund (DE)
(72) Erfinder: HOMANN, Klaus, D-44137 Dortmund (DE); KATZENBACH, Burkhard, D-44137 Dortmund (DE)
(74) Vertreter: König, Gregor Sebastian
(86) Internationale Anmeldenummer: PCT/EP1999/010394
(87) Internationale Veröffentlichungsnummer: WO 2000/040891

(56) Entgegenhaltungen:
- DE-A- 3 909 337
- DE-A- 4 231 882

## Beschreibung

Die Erfindung betrifft ein System zum Überwachen von Versorgungsleitungen, wie beispielsweise unterirdisch verlegten Gasleitungen.

Das Überwachen der Gasversorgungsleitungen wird im Stande der Technik mit Hilfe eines Meßtrupps, bestehend aus einem Lotsen und einem Spürer durchgeführt. Solche Meßtrupps führen aufgrund der rechtlichen Überwachungsverpflichtung der Energieversorgungsuntemehmen in regelmäßigen Abständen Überprüfungen der Gasversorgungsleitungen auf deren Dichtigkeit durch.

Die konkrete Tätigkeit eines solchen Meßtrupps besteht darin, die Gasversorgungsleitungen abzuschreiten und einen möglichen Austritt von Versorgungsgas mit einem Gasspürgerät zu ermitteln. Der Verlauf in der Regel unterirdisch verlegter Gasversorgungsleitungen ist naturgemäß nicht ohne weiteres erkennbar, so daß ein Lotse als Bestandteil des Meßtrupps für die sachgemäße Verfolgung des Meßweges zuständig ist. Das Gasspürgerät wird durch den sogenannten "Spürer" entsprechend den Navigationsanweisungen des Lotsen geführt.

Diese Vorgehensweise ist relativ aufwendig, da der Lotse im Vorfeld des Kontrollganges Kartenauszüge erstellen und einen geeigneten Spürweg ausarbeiten muß. Während des Messens ist der Lotse üblicherweise dafür zuständig, die Vollständigkeit der Messung zu kontrollieren und die Meßergebnisse zu protokollieren.

Dabei werden die kontrollierten Leitungsabschnitte mit den für den Betrieb des Leitungssystems relevanten Auffälligkeiten schriftlich vermerkt. Die Aufzeichnungen dienen gegenüber der zuständigen Kontrollbehörde als Nachweis für die den Energieversorgungsuntemehmen rechtlich obliegende Überwachungspflicht.

Bei der oben beschriebenen Vorgehensweise ist der Einsatz von mindestens zwei Personen zwingend erforderlich.

Darüber hinaus hängt die Zuverlässigkeit der Messung sowohl von der Sorgfalt des Lotsen als auch von der Sorgfalt des Spürers ab. So ist es denkbar, daß der Lotse bei unsauberer Vorgehensweise von dem für den Nachweis eines Gasaustritts erforderlichen Meßweg abweicht und eine Gasaustrittsstelle dadurch übersehen wird. Ferner besteht die Gefahr von Informationsverlusten durch unvollständiges oder fehlerhaftes Aufzeichnen der Überwachungsergebnisse.

Aus DE 39 09 337 A1 ist eine Vorrichtung zur Überprüfung von unterirdisch verlegten Gas- oder Flüssigkeitsteitungen auf Undichtheit offenbart. Dabei wird die tatsächlich geprüfte Wegstrecke aufgezeichnet und die erfassten Messwerte automatisch entsprechenden Markierungen auf der Wegstrecke zugeordnet und eingetragen.

Zur Erfassung der bereits geprüften Wegstrecke können an geeigneten Stellen Markierungen angeordnet sein, die mit Hilfe eines Lesegeräts erfasst werden oder Signale eines Satelliten genutzt werden.

Aus DE 42 31 882 A1 ist eine Vorrichtung bekannt, die mit Hilfe von elektromagnetischer Strahlung Beschädigungen an unterirdisch verlegten Rohren erfasst werden können. Eine entsprechende Vorrichtung ist an einem Fahrzeug befestigt, welches der bekannten Strecke der verlegten Rohre folgt. Wird eine Beschädigung eines Rohres festgestellt, so kann eine exakte Ortsbestimmung mit Hilfe eines Satellitennavigationssystems erfolgen.

Der Erfindung liegt nun die Aufgabe zugrunde, ein Überwachungssystem zu schaffen, welches die vorgenannten Nachteile vermeidet und eine zuverlässige Überwachung ermöglicht.

Das Problem wird durch den unabhängigen Anspruch 1 gelöst. Vorteilhafte Ausführungsformen sind in den Unteransprüchen wiedergegeben.

Im einzelnen wird das Problem der Erfindung dadurch gelöst, daß eine mobile Meßvorrichtung mit einem elektronischen Leitsystem kombiniert wird, welches vorzugsweise auf bestehende Satellitennavigationssysteme in Verbindung mit einem geographischen Informationssystem zur Auswertung der Navigationsinformationen zurückgreift.

Besonders bevorzugt ist eine Kombination einer mobilen Meßvorrichtung mit Navigationssystem mit einer automatischen Dokumentation der Meßergebnisse und/oder einer akustischen oder optischen Bedienerleitung anhand der ermittelten Navigationsdaten.

Mit Hilfe der erfindungsgemäßen Meßvorrichtung läßt sich der Überwachungsvorgang mit einer einzigen Person durchführen. Mit der computergesteuerten steuerten Navigation und Dokumentation wird die Überwachung weitgehend unabhängig von der Zuverlässigkeit der Bedienperson.

Ein besonderer Vorteil besteht darin, daß die Sicherheit der Bedienperson während des Überwachungsvorgangs erheblich erhöht wird. Aufgrund des konkreten Gasleitungsverlaufs sind während eines Überwachungsganges häufig verkehrsgefährdete Örtlichkeiten zu begehen. Die Übernahme wesentlicher Überwachungsfunktionen durch die mobile Meßvorrichtung erlaubt es der Bedienperson, ihre Konzentration auf eine Gefahrenvermeidung bei der Begehung zu richten. Insbesondere bei Verwendung eines akustischen Leitsystems ist das Konzentrationspotential der Bedienperson weitgehend frei und steht somit beispielsweise für die Gefahrenvermeidung zur Verfügung.

Eine Aufzeichnung der Spur des abgeschrittenen Weges, wie durch eine Ausführungsform der Meßvorrichtung verwirklicht, bietet den Vorteil, eine exakte örtliche Zuordnung der Meßwerte zu erlauben.

Im folgenden wird die Erfindung anhand eines in der Zeichnung dargestellten Ausführungsbeispiels des näheren erläutert.

In der Zeichnung zeigen:

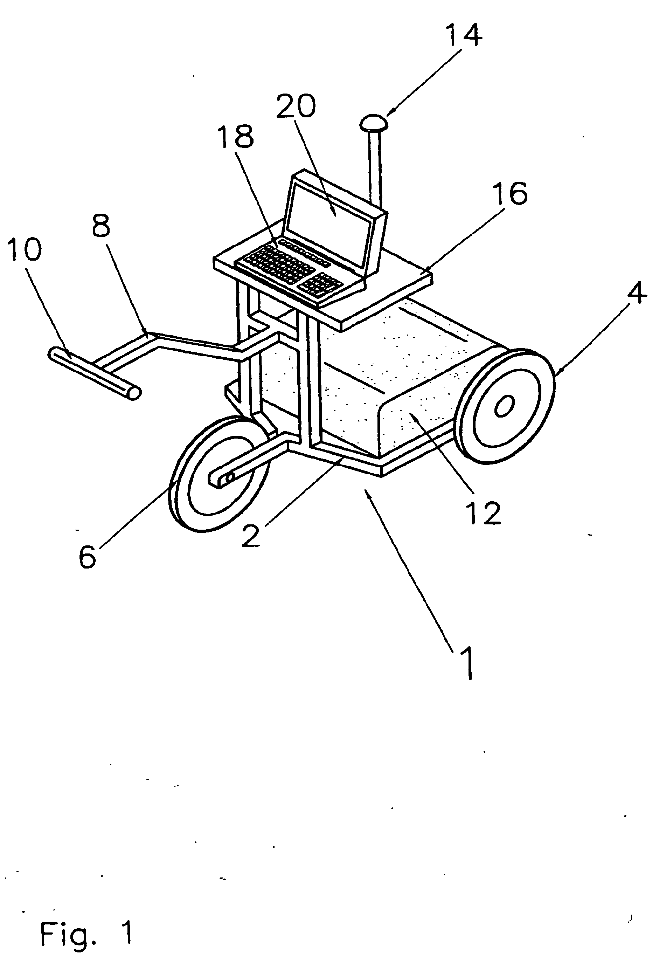

- Fig. 1: eine erfindungsgemäße mobile Meßvorrichtung;
- Fig. 2: ein Flußdiagramm einer Überwachungsbegehung mit Hilfe der erfindungsgemäßen Meßvorrichtung;
- Fig. 3: ein Flußdiagramm einer erstmaligen Spurbestimmung mit Hilfe der erfindungsgemäßen Meßvorrichtung.

Die mobile Meßvorrichtung 1 besteht aus einem Gestell 2 mit Rollen 4, 6 und einem Führungsarm 8 mit Führungsgriff 10. Auf dem Gestell ist eine Meßelektronik 12 mit Satelliten- und Koppelnavigationseinrichtungen, Gasprüfgeräten und einer Stromversorgung angeordnet. Ferner besitzt das Gestell eine Antenne für den Satelliten- und Korrekturdatenempfang 14 sowie einen im Bereich des Führungsarms 8 angeordneten Tisch 16 mit einer Rechnereinheit 18.

Das Gestell ist mit drei Laufrädem ausgestattet, wobei das zentrale Laufrad 6 gleichzeitig als Meßrad für die Wegstrecke dient und mit der Rechnereinheit verbunden ist.

Der Rechner ist so auf dem Tisch angeordnet, daß die Bedienperson beim Führen der mobilen Meßvorrichtung 1 am Griff 10 auf dem Bildschirm 20 des Rechners 18 angezeigte Daten während der Begehung ablesen kann. Der Rechner 18 besitzt ferner eine Einrichtung zur akustischen Signalübermittlung an die Bedienperson.

Zur Positionsbestimmung mit Hilfe der Satellitennavigationseinrichtung 12 und der Antenne 14 wird zunächst auf bestehende Satellitennavigationssysteme, wie GPS (USA) und Glonass (Rußland) zurückgegriffen. Auf die vorgenannten Systeme ist ein Differentialverfahren aufgesetzt, um die Genauigkeit der Ortsbestimmung zu erhöhen. Hierzu kann auf bereits verfügbare Korrekturverfahren, wie beispielsweise das SAPOS-HEPS EchtzeitPositionierungssystem der deutschen Landesvermessungsämter oder eine bekannte Referenzstation des Energieversorgungsuntemehmens oder Leitungsbetreibers zurückgegriffen werden. Sofern die Genauigkeit der reinen Satellitennavigationspositionierung ausreicht, läßt sich das System auch ohne Referenzpunkte betreiben.

Um kurzzeitige Ausfälle beim Empfang der Satellitensignale zu überbrücken - ist die Verwendung eines zusätzlichen Koppel-Navigationssystems von Vorteil. Mit diesem System wird die letzte durch das Satellitensystem bestimmte Position durch einen Streckenvektor nach Betrag und Richtung fortgeschrieben, bis das Satellitensystem wieder verläßliche Daten liefert.

Der Betrag des Streckenvektors kann beispielsweise über Sensoren in dem Meßrad 6 aufgezeichnet werden. Eine indirekte Streckenmessung kann mit Hilfe von Geschwindigkeitssensoren durch einfache Integration des Meßsignals erreicht werden. Eine weitere indirekte Möglichkeit der Streckenmessung besteht in der zweifachen Integration des Meßsignals eines Beschleunigungsgebers.

Die Richtung des Streckenvektors kann direkt über einen elektronischen Kompaß oder indirekt über ein orthogonales Paar von Geschwindigkeitssensoren gewonnen werden. Ferner läßt sich ein Inertialmeßsystem, beispielsweise in Form eines Kreisels oder ein zweiachsig-orthogonaler Beschleunigungsaufnehmer zur Richtungsaufzeichnung einsetzen.

Zur Navigation des Gasspürgerätes wird vorzugsweise ein geographisches Informationssystem eingesetzt, welches an die konkreten Gegebenheiten des Überwachungsgebietes angepaßt ist. Es gestattet die Verknüpfung der Positionsinformationen mit den topographischen Informationen über das Überwachungsgebiet. Als Grundlage für diese Verknüpfung ist eine lnitiallsierung des Positionsmeßsystems erforderlich. Hierfür lassen sich Korrekturdaten externer Anbieter oder mit Hilfe eigener Stationen auf koordinatenmäßig bekannten Punkten ermittelte Korrekturdaten einsetzen. Ebenfalls geeignet ist die Ermittlung von Korrekturdaten durch den Betrieb beliebig angeordneter Referenzstationen im Umfeld solcher Punkte. Die Koordinaten der Referenzstation werden dann durch Messungen in bezug auf mindestens einen koordinatenmäßig bekannten Punkt ermittelt.

Die vorgenannten Initialisierungsverfahren liefern Positionierungskoordinaten in einem mathematisch eindeutig definierten Bezugssystem, wie beispielsweise WGS 84, die sich über entsprechende Transformationsansätze in realtopographische Informationen umsetzen lassen.

Die zur Navigation notwendigen topographischen Informationen können aus vorhandenen Netzinformationssystemen der Energieversorgungsuntemehmen abgeleitet und vor Beginn der Begehung für das Untersuchungsgebiet auf die Rechnereinheit 18 übertragen werden.

Der abzuschreitende Kontrollweg muß nicht mit dem tatsächlichen Verlauf der Versorgungsleitungen übereinstimmen. Dies ist insbesondere bei den Gasleitungen der Fall, die unter versiegelten Oberflächen verlegt sind, da ein Gasaustritt nur in den Randbereichen der versiegelten Fläche meßbar ist.

Derartige Fachinformationen werden nach Eingabe in die Rechnereinheit 18 mit den Positionierungs- und Wegedaten verrechnet und bei der Bedienerführung durch die erfindungsgemäße Meßvorrichtung berücksichtigt. Dies kann beispielsweise durch die Integration einer digitalen Spur in das System erfolgen. Die Spur läßt sich aus vorhandenen Daten und Kenntnissen ableiten und in die Rechnereinheit 18 eingeben.

Ein besonderer Vorteil der erfindungsgemäßen Meßvorrichtung besteht darin, eine automatische Spuraufzeichnung zu ermöglichen. Die beispielsweise im Rahmen einer Erstbegehung aufgezeichnete Spur kann für alle Folgemessungen verwendet werden. -

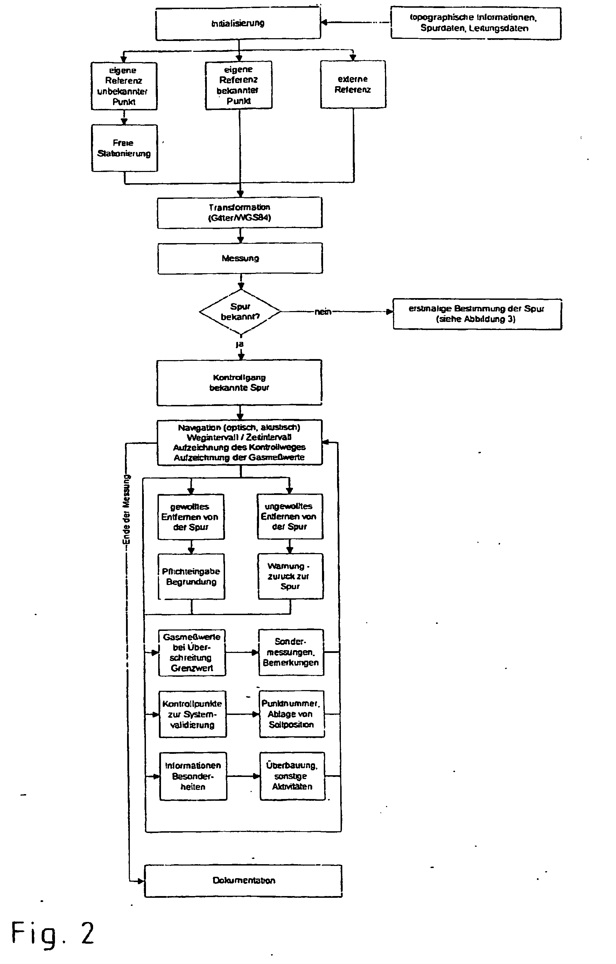

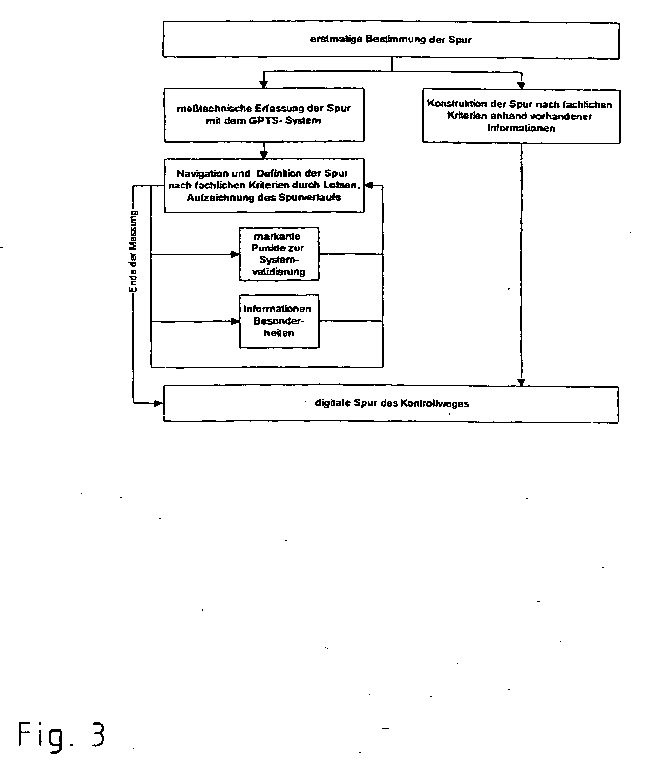

In Fig. 2 ist ein Flußdiagramm der Begehung einer Gasleitung mit der erfindungsgemäßen Vorrichtung dargestellt, während in Fig. 3 ein Flußdiagramm einer Aufzeichnung einer digitalen Spur im Wege der Erstbegehung dargestellt ist.

Bei der in Fig. 2 dargestellten Vorgehensweise wird die Bedienperson entlang der vom Rechner vorgegebenen Spur geführt. Der Rechner berücksichtigt dabei einen Toleranzbereich links bzw. rechts des Sollweges, bei dessen Verlassen ein Hinweis erfolgt, auf den die Bedienperson, wenn dies beabsichtigt ist, mit einer Eingabe des Grundes für das Verlassen des Sollweges reagieren muß. Dieser Grund wird wiederum im Dokumentationssystem der Rechnereinheit verarbeitet und kann bei der nächsten Begehung zur Verfügung stehen.

Bei einer vom Gasspürgerät ermittelten erhöhten Gaskonzentration erhält die Bedienperson bestimmte standardisierte Anweisungen, um eine reproduzierbare Dokumentation des Gasaustritts zu gewährleisten.

Besonders vorteilhaft ist es, eine kabellose Hörer-Mikrofonkombination für die Kommunikation zwischen Bedienperson und Rechnereinheit neben Display, Lautsprecher und Tastatur einzusetzen. Durch diese Maßnahmen wird die Bedienperson in ihrer Konzentration weitgehend für andere Aufgaben freigestellt.

Insgesamt ermöglicht die Erfindung somit eine sichere Leitungsüberwachung mit geringem Personalaufwand.

## Patentansprüche

1. Mobile Meßvorrichtung für die Überwachung von Undichtigkeiten an Gasleitungen, **gekennzeichnet durch** ein elektronisches Leitsystem zur Vorgabe eines mit der mobilen Messvorrichtung zu verfolgenden Weges.

2. Vorrichtung nach Anspruch 1; **gekennzeichnet durch** ein Satellitennavigationssystem.

3. Vorrichtung nach Anspruch 1 oder 2, **gekennzeichnet durch** eine Rechnereinheit (18) mit einem kartographischen Ortungssystem und/oder einem Dokumentationssystem.

4. Mobile Meßvorrichtung nach einem oder mehreren der vorhergehenden Ansprüche, **gekennzeichnet durch** eine elektronische Dokumentation der Me**ßergebnisse.**

5. Mobile Meßvorrichtung nach einem oder mehreren der vorhergehenden Ansprüche, **gekennzeichnet durch** eine akustische oder optische Bedienerführung anhand der errechneten Navigationsdaten.

6. Mobile Meßvorrichtung nach einem oder mehreren der vorgehenden Ansprüche, **gekennzeichnet durch** ein Stütz/Meßrad (6).

7. Mobile Meßvorrichtung nach Anspruch 6 **dadurch gekennzeichnet, daß** mit Hilfe des Stütz/Meßrades (6) eine Spur des abgeschrittenen Weges mit Hilfe der Rechnereinheit (18) aufgezeichnet wird.

8. Vorrichtung nach einem oder mehreren der vorhergehenden Ansprüche **dadurch gekennzeichnet, daß** die Sateititennavigation mit Sensoren im Meßrad (6) gekoppelt ist und über die Erzeugung eines Streckenvektors in der Rechnereinheit positionskorrigiert wird.

9. Vorrichtung nach Anspruch 8 **dadurch gekennzeichnet, daß** die Richtungskomponente des Streckenvektors Ober einen elektronischen Kompaß, ein orthogonales Paar von Geschwindigkeitssensoren, einen zweiachsigorthogonalen Beschleunigungsaufnehmer oder einen Kreisel erzeugt wird.

10. Verfahren zum Überwachen von Gasleitungen **dadurch gekennzeichnet, daß** ein durch ein elektronisches Navigationssystem vorgegebener Weg mittels einer mobilen Meßvorrichtung verfolgt wird.

## Revendications

1. Dispositif de mesure mobile pour la surveillance de fuites sur des conduites de gaz, **caractérisé par** un système de guidage électronique pour allouer ou affecter un chemin destiné à être suivi par le dispositif de mesure mobile.

2. Dispositif selon la revendication 1, **caractérisé par** un système de navigation par satellites.

3. Dispositif selon la revendication 1 ou 2, **caractérisé par** une unité de calcul ou ordinateur (18) avec un système de localisation cartographique et/ou un système de documentation.

4. Dispositif de mesure mobile selon l'une ou plusieurs des revendications précédentes, **caractérisé par** une documentation électronique des résultats de mesure.

5. Dispositif de mesure mobile selon l'une ou plusieurs des revendications précédentes, **caractérisé par** un guidage de l'utilisateur acoustique ou optique à l'aide des données de navigation calculées.

6. Dispositif de mesure mobile selon l'une ou plusieurs des revendications précédentes, **caractérisé par** une roue d'appui ou de support/de mesure (6).

7. Dispositif de mesure mobile selon la revendication 6, **caractérisé par le fait que** l'on enregistre à l'aide de la roue d'appui ou de support /de mesure (6) une trace du chemin mesuré au pas à l'aide de l'ordinateur (18).

8. Dispositif selon l'une ou plusieurs des revendications précédentes, **caractérisé par le fait que** la navigation par satellites est couplée à des capteurs dans la roue de mesure (6) et corrigée en position par la génération d'un vecteur de distance dans l'ordinateur.

9. Dispositif selon la revendication 8, **caractérisé par le fait que** la composante de direction du vecteur de distance est générée par un compas électronique, une paire orthogonale de capteurs de vitesse, un capteur d'accélération orthogonal biaxe ou un gyroscope.

10. Procédé pour la surveillance de conduites de gaz, **caractérisé par le fait que** l'on suit un chemin déterminé ou alloué par un système de navigation électronique au moyen d'un dispositif de mesure mobile.

## Claims

1. Mobile measuring device for monitoring leaks in gas lines, **characterised by** an electronic guidance system for specifying a route to be followed by the mobile measuring device.

2. Device according to claim 1, **characterised by** a satellite navigation system.

3. Device according to claim 1 or 2, **characterised by** a computer unit (18) with a cartographic position finding system and/or a documentation system.

4. Mobile measuring device according to one or more of the preceding claims, **characterised by** electronic documentation of the measuring results.

5. Mobile measuring device according to one or more of the preceding claims, **characterised by** acoustic or optical operator guidance based on the calculated navigation data.

6. Mobile measuring device according to one or more of the preceding claims, **characterised by** a supporting/measuring wheel (6).

7. Mobile measuring device according to claim 6, **characterised in that** with the aid of the supporting/measuring wheel (6), a trace of the route followed is recorded with the aid of the computer unit (18).

8. Device according to one or more of the preceding claims, **characterised in that** the satellite navigation system is linked to sensors in the measuring wheel (6) and undergoes positional correction through the generation of a route vector in the computer unit.

9. Device according to claim 8, **characterised in that** the directional components of the route vector are generated via an electronic compass, an orthogonal pair of velocity sensors, a two-axis orthogonal acceleration sensor or a gyroscope.

10. Method for monitoring gas lines, **characterised in that** a route predefined by an electronic navigation system is followed by means of a mobile measuring device.
